# EUROPÄISCHE PATENTSCHRIFT

(11) **EP 0 936 958 B1**
(45) Veröffentlichungstag und Bekanntmachung des Hinweises auf die Patenterteilung: **18.12.2002**
(21) Anmeldenummer: 98949999.1
(22) Anmeldetag: 08.09.1998
(51) Int. Cl.: B23Q 5/14, F16H 37/06

(54) **DREHANTRIEB**
ROTATING DRIVING UNIT
SYSTEME D'ENTRAINEMENT EN ROTATION

(30) Priorität: 09.09.1997 DE 19739511
(43) Veröffentlichungstag der Anmeldung: 25.08.1999
(73) Patentinhaber: Maschinenfabrik Berthold Hermle Aktiengesellschaft, D-78559 Gosheim (DE)
(72) Erfinder: KUTSCHKA, Werner, D-86179 Augsburg (DE)
(74) Vertreter: Vetter, Hans, Dipl.-Phys. Dr.
(86) Internationale Anmeldenummer: EP9805689
(87) Internationale Veröffentlichungsnummer: WO99012700

(56) Entgegenhaltungen:
- EP-A- 0 454 530
- DE-U- 9 102 664
- GB-A- 1 217 245
- GB-A- 2 067 943
- US-A- 2 995 069
- US-A- 4 644 819
- P.J.KREHER: "Werkzeugmaschinen und Zubehör auf der Werkzeugmaschinen-Ausstellung Hannover 1964" ANTRIEBSTECHNIK., Bd. 3, Nr. 12, Dezember 1964, Seiten 437-443, XP002090351 MAINZ DE

## Beschreibung

Die Erfindung betrifft einen Drehantrieb für eine Werkzeughaltevorrichtung nach dem Oberbegriff des Anspruches 1.

Werkzeugantriebe von Drehmaschinen sollen die Forderung erfüllen, mit relativ hoher Drehzahl bei relativ geringem Drehmoment zu arbeiten. Werkzeugantriebe von Fräsmaschinen dagegen sollen die gegenteilige Forderung erfüllen, das heißt bei relativ hohem Drehmoment und geringer Drehzahl zu arbeiten. Bei Bearbeitungszentren, die eine Dreh- und eine Fräsmaschine in sich vereinigen sind daher für das Drehen und das Fräsen getrennte Antriebe mit getrennten Werkzeugwechselvorrichtungen vorgesehen.

Es besteht die Aufgabe, einen Drehantrieb zu schaffen, bei dem es mit einer gemeinsamen Werkzeugwechselvorrichtung möglich ist, Dreharbeiten als auch Fräsarbeiten durchführen zu können.

Gelöst wird diese Aufgabe mit den Merkmalen des Anspruches 1. Vorteilhafte Ausgestaltungen sind den Unteransprüchen entnehmbar.

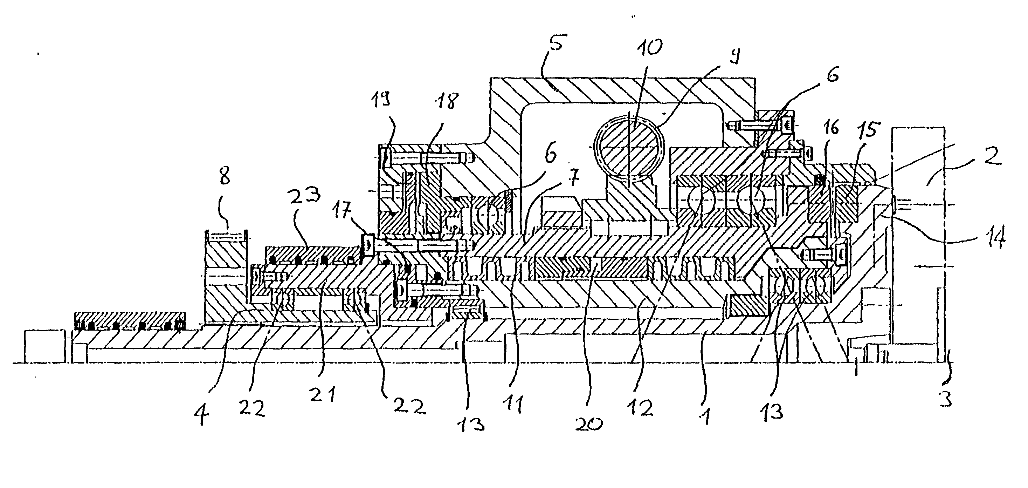

Ein Ausführungsbeispiel wird nachfolgend anhand der Zeichnung näher erläutert. Diese zeigt einen Schnitt durch den oberen Teil des Drehantriebs.

Eine Welle 1 trägt an ihrem rechten Ende einen Befestigungsflansch 2, der seinerseits eine Werkzeughaltevorrichtung 3 trägt. Auf dem rechten Ende der Welle 1 ist ein hohler Wellenstumpf 4 angeordnet, an welchem eine Antriebsvorrichtung angreift, was schematisch durch den Pfeil 8 verdeutlich wird. In der gezeigten Axialstellung der Welle 1 ist die Welle 1 von dem Wellenstumpf 4 entkoppelt.

Ein Gehäuse 5 lagert über die Lager 6 eine Hohlwelle 7. Diese Hohlwelle 7 trägt ein Schneckenrad 9, in welche eine Schnecke 10 eingreift. Diese Schnecke 10 wird vom Gehäuse 5 gelagert und wird von einer weiteren, nicht dargestellten Antriebsvorrichtung angetrieben. Im Innern der Hohlwelle 7 ist eine Klemmpinole 11 angeordnet, welche sich zusammen mit der Hohlwelle 7 dreht. Die Klemmpinole 11 umgibt eine weitere Hohlwelle 12, welche über Lager 13 die Welle 1 lagert. Die weitere Hohlwelle 12 und die Welle 1 sind gemeinsam axial verschiebbar.

Ein Flansch 14 der Welle 1 trägt eine Plankerbverzahnung 15, welche mit einer Plankerbverzahnung 16 an der rechten Stirnseite der Hohlwelle 7 zusammenwirkt.

Das linke Ende der weiteren Hohlwelle 12 ist als doppelt wirkender Zylinder 17 ausgebildet, dessen Kammern durch die Hohlwelle 7 begrenzt sind. Die Hohlwelle 7 trägt eine Bremsscheibe 18, welche mit einem gehäuseseitigen Bremsbacken 19 zusammenwirkt.

Zum Ausführen von Fräsarbeiten nehmen die Welle 1 und die Hohlwelle 12 die in der Figur dargestellte Axialstellung ein. Hierbei stehen die Verzahnungen 15, 16 miteinander in Eingriff. Die Kammer 20 der Klemmpinole 11 ist mit Druck beaufschlagt, ebenso die Kammer rechts vom Zylinder 17. Die Welle 1 und der Wellenstumpf 4 sind zueinander entkoppelt. Wird die Schnecke 10 in Drehung versetzt, dreht sich der Befestigungsflansch 2 und damit die Werkzeughaltevorrichtung 3 relativ langsam, jedoch mit großem Antriebsmoment. Die Welle 1, die Hohlwelle 12 und die Welle 7 drehen sich gemeinsam, wobei die Klemmpinole 11 die Klemmung zwischen den beiden Hohlwellen 7, 12 bewirkt. Wird die Schnecke 10 stillgesetzt, dann läuft der Bremsbacken 19 gegen die Bremsscheibe 18 an. Gelagert werden die Wellen durch die Lager 6.

Sollen Dreharbeiten durchgeführt werden, dann wird die Schnecke 10 stillgesetzt. Es wird die Kammer links vom Zylinder 17 mit Druck beaufschlagt, während die rechte Kammer ebenso wie die Kammer 20 entlastet werden. Hierdurch führt die weitere Hohlwelle 12 eine Axialbewegung nach rechts aus. Da die weitere Hohlwelle 12 über die Lager 13 mit der Welle 1 axial verschiebbar verbunden ist, führt die Welle 1 die gleiche Axialbewegung aus. Hierbei kommen die Verzahnungen 15, 16 miteinander außer Eingriff, während die Welle 1 mit dem Wellenstumpf 4 dreh- und kraftschlüssig verbunden werden. Wird nunmehr der Antrieb 8 betätigt, dann drehen sich der Befestigungsflansch 2 und die Werkzeughaltevorrichtung 3 mit relativ großer Drehzahl, so daß nunmehr Dreharbeiten ausführbar sind. Bei stillstehender Hohlwelle 7 ist der Bremsbacken 19 gegen die Bremsscheibe 18 geführt.

Zur Versorgung der Kammern beidseits des Zylinders 17 und der Kammer 20 weist die Hohlwelle 7 einen hohlen Wellenansatz 21 auf, der über Lager 22 den Wellenstumpf 4 lagert und der von einem Gehäuseansatz 23 umgeben ist, der mit dem Wellenansatz 21 schleifringkörperartig zusammenwirkt und die hydraulischen Anschlüsse aufweist. Diese Anschlüsse sind über Bohrungen 24 mit den vorerwähnten Kammern verbunden.

## Patentansprüche

1. Drehantrieb für eine Werkzeughaltevorrichtung (3) mit einer die Haltevorrichtung (3) tragenden Welle (1), **dadurch gekennzeichnet, daß** konzentrisch zur Welle (1) eine Hohlwelle (7) angeordnet ist, die von einer weiteren Antriebsvorrichtung antreibbar ist, zwischen der Welle (1) und der Hohlwelle (7) eine ein- und ausrückbare Kupplung (15, 16) angeordnet ist, die durch eine axiale Relativbewegung zwischen Welle (1) und Hohlwelle (7) betätigbar ist, zwischen der Welle (1) und der Hohlwelle (7) eine weitere, die axiale Relativbewegung bewirkende Hohlwelle (12) angeordnet ist, welche die Welle (1) lagert, die Hohlwelle (7) in einem Gehäuse (5) gelagert ist und zwischen der Hohlwelle (7) und der weiteren Hohlwelle (12) eine Klemmvorrichtung angeordnet ist, die bei in Antrieb versetzter Hohlwelle (7) diese mit der weiteren Hohlwelle (12) koppelt.

2. Drehantrieb nach Anspruch 1, **dadurch gekennzeichnet, daß** die Hohlwelle (7) unverschiebbar im Gehäuse (5) gelagert ist und die weitere Hohlwelle (12) die Welle (1) axial verschiebt.

3. Drehantrieb nach Anspruch 1 oder 2, **dadurch gekennzeichnet, daß** zwischen Hohlwelle (7) und Gehäuse (5) eine Bremse (18, 19) vorgesehen ist, die bei stillstehender Hohlwelle (7) betätigbar ist.

4. Drehantrieb nach Anspruch 2 oder 3, **dadurch gekennzeichnet, daß** die Hohlwelle (7) und die weitere Hohlwelle (12) als doppelt wirkender Kolben (Zylinder 17) ausgebildet sind.

5. Drehantrieb nach einem der Ansprüche 1 bis 4, **dadurch gekennzeichnet, daß** der an der weiteren Hohlwelle (12) angrenzende Teil der Hohlwelle (7) als hydraulisch betätigbare Klemmpinole (11) ausgebildet ist.

6. Drehantrieb nach Anspruch 5, **dadurch gekennzeichnet, daß** ein Wellenansatz (21) der Hohlwelle (7) und ein Gehäuseansatz (23) schleifringskörperartig zusammenwirken und die hydraulischen Anschlüsse für den doppelt wirkenden Kolben und die Klemmpinole (11) aufweisen.

7. Drehantrieb nach Anspruch 6, **dadurch gekennzeichnet, daß** der Wellenansatz (21) der Hohlwelle (7) einen mit der Welle (1) koppelbaren Wellenstumpf(4) lagert, der in der einen axialen Stellung der Welle (1) mit dieser gekoppelt ist und in der anderen axialen Stellung mit dieser entkoppelt ist und an dem die eine Antriebsvorrichtung (8) angreift.

## Claims

1. Rotary drive for a tool holding device (3) with a shaft (1) carrying the holding device (3), **characterised in that a** hollow shaft (7) capable of being driven by a further drive device is arranged concentric with the shaft (1), **in that** an engageable and disengageable clutch (15, 16) operated by an axial relative movement between the shaft (1) and the hollow shaft (7) is arranged between the shaft (1) and the hollow shaft (7), **in that** a further hollow shaft (12) causing the axial relative movement and supporting the shaft (1) is arranged between the shaft (1) and the hollow shaft (7), **in that** the hollow shaft (7) is supported in a housing (5), and **in that** a clamping device is arranged between the hollow shaft (7) and the further hollow shaft (12) to couple the hollow shaft (7) when being driven to the further hollow shaft (12).

2. Rotary drive according to claim 1, **characterised in that** the hollow shaft (7) is movably supported in the housing (5) and **in that** the further hollow shaft (12) axially moves the shaft (1).

3. Rotary drive according to claim 1 or 2, **characterised in that** a brake (18, 19) capable of application when the hollow shaft (7) is stationary is provided between the hollow shaft (7) and the housing (5).

4. Rotary drive according to claim 2 or 3, **characterised in that** the hollow shaft (7) and the further hollow shaft (12) are designed as double-acting pistons (cylinder 17).

5. Rotary drive according to any of claims 1 to 4, **characterised in that** the part of the hollow shaft (7) adjacent to the further hollow shaft (12) is designed as a hydraulically operated clamping sleeve (11).

6. Rotary drive according to claim 5, **characterised in that** a shaft shoulder (21) of the hollow shaft (7) and a housing shoulder (23) act together in the manner of a slip ring body and are provided with the hydraulic connections for the double-acting piston and the clamping sleeve (11).

7. Rotary drive according to claim 6, **characterised in that** the shaft shoulder (21) of the hollow shaft (7) supports a stub shaft (4) capable of coupled to the shaft (1), which is coupled to the shaft (1) in one of its axial positions and uncoupled therefrom in its other axial position and which is acted upon by a drive device (8).

## Revendications

1. Entraînement rotatif pour un dispositif de maintien d'outil (3) comprenant un arbre (1) supportant le dispositif de maintien (3), **caractérisé en ce qu'**un arbre creux (7) est disposé concentriquement à l'arbre (1), lequel peut être entraîné par un autre dispositif d'entraînement, **en ce qu'**un accouplement pouvant être mis en prise et libéré (15, 16) est disposé entre l'arbre (1) et l'arbre creux (7), lequel peut être actionné par un mouvement relatif axial entre l'arbre (1) et l'arbre creux (7), **en ce qu'**un autre arbre creux (12) réalisant le mouvement relatif axial est disposé entre l'arbre (1) et l'arbre creux (7), lequel loge l'arbre (1), **en ce que** l'arbre creux (7) est logé dans un boîtier (5), et **en ce qu'**un dispositif de serrage est disposé entre l'arbre creux (7) et l'autre arbre creux (12), lequel couple l'arbre creux (7) avec l'autre arbre creux (12) lorsque l'arbre creux (7) est déplacé durant l'entraînement.

2. Entraînement rotatif selon la revendication 1, **caractérisé en ce que** l'arbre creux (7) est logé de façon non coulissante dans le boîtier (5) et **en ce que** l'autre arbre creux (12) pousse l'arbre (1) en direction axiale.

3. Entraînement rotatif selon la revendication 1 ou 2, **caractérisé en ce qu'**un frein (18, 19) est prévu entre l'arbre creux (7) et le boîtier (5), lequel peut être actionné lorsque l'arbre creux (7) est immobile.

4. Entraînement rotatif selon la revendication 2 ou 3, **caractérisé en ce que** l'arbre creux (7) et l'autre arbre creux (12) sont réalisés comme piston à double action (cylindre 17).

5. Entraînement rotatif selon l'une des revendications 1 à 4, **caractérisé en ce que** la partie de l'arbre creux (7) adjacente à l'autre arbre creux (12) est réalisée comme une douille de serrage (11) pouvant être actionnée par voie hydraulique.

6. Entraînement rotatif selon la revendication 5, **caractérisé en ce qu'**un prolongement d'arbre (21) de l'arbre creux (7) et un prolongement de boîtier (23) coopèrent à la manière d'un corps de bague glissante et comprennent les jonctions hydrauliques pour le piston à double action et la douille de serrage (11).

7. Entraînement rotatif selon la revendication 6, **caractérisé en ce que** l'épaulement d'arbre (21) de l'arbre creux (7) loge un bout d'arbre (4) pouvant être accouplé avec l'arbre (1), lequel est accouplé dans l'une des positions axiales de l'arbre (1) avec celui-ci et est découplé de celui-ci dans l'autre des positions axiales, et avec lequel vient en prise le dispositif d'entraînement (8).
